(19) Europäisches Patentamt
European Patent Office
Office européen des brevets

(11) **EP 2 400 188 B1**

(12) **FASCICULE DE BREVET EUROPEEN**

(45) Date de publication et mention de la délivrance du brevet:
**17.04.2013 Bulletin 2013/16**

(51) Int Cl.:
*F16H 61/04* *(2006.01)*     *F16H 61/06* *(2006.01)*
*F16H 61/688* *(2006.01)*

(21) Numéro de dépôt: **10306178.4**

(22) Date de dépôt: **27.10.2010**

(54) **Système de pilotage d'une boîte de vitesse automatique à embrayages à passage de rapports sans rupture à la roue**

Steuersystem eines automatischen Getriebes mit Kupplungen mit unterbrechungsfreier Übertragung auf das Rad

System for controlling an automatic transmission with clutches for shifting gears without any wheel interruption

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.11.2009 FR 0957869**

(43) Date de publication de la demande:
**28.12.2011 Bulletin 2011/52**

(73) Titulaire: **Renault s.a.s.**
**92100 Boulogne Billancourt (FR)**

(72) Inventeurs:
• **Vandekerkhove, Rémi**
**75012 Paris (FR)**
• **Yzon, Aurélien**
**91410 Dourdan (FR)**

(56) Documents cités:
**DE-A1- 19 939 334      US-A- 4 485 443**
**US-A1- 2005 037 893**

**Description**

L'invention se situe dans le demande des boîtes de vitesses automatiques à passage de vitesses sans rupture de couple, telles que les boites de vitesses automatiques à double embrayage, ou les boîtes de vitesses à coupleurs coniques compacts, utilisées dans les véhicules automobiles. Dans le cas du double embrayage, un couple moteur est transmis d'un arbre primaire au travers d'un système démultipticateur, vers un premier ou un deuxième arbre secondaire, puis de l'arbre secondaire au travers d'un embrayage vers un train de roue du véhicule. Simultanément, un rapport différent de celui du système démultipliteur engagé peut être présélectionné sur le deuxième arbre secondaire relié par un deuxième embrayage, à cet instant ouvert, au train de roues du véhicule. Pour passer du rapport engagé au rapport sélectionné, on effectue une « bascule de couple » en ouvrant progressivement l'embrayage du premier arbre secondaire pendant que l'on ferme l'embrayage du deuxième arbre secondaire.

Dans une boîte de vitesses à coupleurs coniques compacts, certains rapports de vitesse, par exemple les rapports de 2ème, 3ème, 4ème et 5ème sont engagés en permanence entre des pignons fous d'un arbre primaire relié au moteur et des pignons fixes d'un arbre secondaire relié au train de roues du véhicule.

Chaque pignon, fou de l'arbre primaire peut être solidarisé en rotation avec l'arbre primaire au moyen d'un coupleur conique compact qui joue le rôle d'un embrayage local entre le pignon fou et l'arbre primaire. Pour le groupe de rapports ainsi équipé de coupleurs coniques compacts, le changement de rapports se fait en effectuant une « bascule de couple », en ouvrant progressivement le coupleur du rapport engagé et en fermant simultanément de manière progressive, le coupleur du rapport vers lequel on souhaite basculer.

L'opération de bascule de couple, pendant laquelle on fait varier la répartition du couple moteur entre les deux systèmes démultiplicateurs actifs est délicate, car des à-coups dans la courbe de variation de couple sur l'un des coupleurs, entraînent à leur tour des instabilités sur la courbe de couple de l'autre coupleur, ce qui peut perturber le point de fonctionnement du moteur et entraîner une sensation d'inconfort chez le conducteur du véhicule.

Notamment en début et fin de bascule, les courbes de couple subissent des ruptures de pente. Ces ruptures de pente compliquent le suivi des consignes et sont des causes d'imprécision dans la réalisation. Les points les plus sensibles sont :

- le début de la montée en couple du coupleur à engager : des chocs peuvent survenir en cas de montée trop brusque ;
- le début de la descente en couple du coupleur initial : des chocs ou des envolées de régime peuvent intervenir si l'évolution du coupleur initial n'est pas parfaitement en phase avec l'évolution du coupleur final ;
- la fin d'ouverture du coupleur initial : un choc peut suivent si la fin de l'ouverture est trop brutale.

En outre, les stratégies de bascule de couple sont soumises à des contraintes différentes suivant que l'on est dans le cas d'un passage à, forte charge, auquel cas il faut effectuer les changements rapidement pour ne pas détériorer les coupleurs, ou suivant que l'on est dans le cas d'une bascule du couple a faible charge. Dans ce dernier cas une irrégularité de même valeur absolue dans les variations de la courbe de basculement, sera perçue dans des proportions plus élevées par le conducteur que dans le cas d'une bascule à forte charge.

La demande de brevet EP 1 132 659 propose d'utiliser des courbes affines par morceaux pour piloter les pressions de deux embrayages d'une boîte automatique lors du transfert du couple moteur d'un premier embrayage vers un second embrayage de la boîte. Le document prévoit, avant la phase de bascule, une phase de stabilisation en pression des deux embrayages. Dans cette phase, chacun des deux embrayages est amené à la limite du glissement pour le couple qu'il doit transmettre, c'est-à-dire la limite du glissement à couple nul pour l'embrayage à engager, et la limite du glissement en transmettant le couple moteur pour l'embrayage à ouvrir.

Cependant, au moment de l'engagement de la phase de bascule, la rupture de pente de courbes de couples de deux embrayages peut être source d'instabilité du couple total transmis aux roues. C'est notamment le cas si les variations de couple du premier embrayage ne sont pas exactement compensées par les variations de couple du second embrayage.

Le document US 2005/037893 divulguant les caractéristiques du préambule des revendications 1 et 11 décrit une méthode de transfert de couple d'un premier à un second embrayage. L'embrayage initialement ouvert commence à transférer une partie du couple, pendant que l'embrayage initialement fermé reste verrouillé juste au dessus de la valeur correspondant à sa limite de glissement. Le couple du moteur commence à être adapté à la hausse ou à la baisse durant cette même étape. Suivant une variante de réalisation, la dérivée seconde du couple transmis par l'embrayage initialement ouvert est positive au début de l'étape de fermeture de l'embrayage.

Cette progressivité supplémentaire retarde le moment de fin de transfert de couple, ce qui, pour les changements de rapport à énergie importante, peut accélérer l'usure de l'embrayage.

L'invention a pour but un système de pilotage d'une boîte de vitesses automatique à passage sous couple permettant, lors d'un changement de rapport, de gérer, de manière aussi continue que possible dans le temps, le transfert du couple moteur d'un embrayage ou d'un système coupleur associé à un premier rapport, vers un second embrayage ou un second système coupleur associé à un autre rapport.

Un autre but de l'invention est d'assurer un passage de rapport plus progressif quand l'énergie transmise aux roues est modérée, et d'assurer au contraire un passage de rapport suffisamment rapide quand l'énergie transmise est importante, de manière à éviter de détériorer les embrayages ou les systèmes coupleurs.

Ainsi, un système de pilotage d'une boîte de vitesses automatique comprenant un premier embrayage et un second embrayage permettant chacun de coupler ou de découpler progressivement en rotation un arbre de sortie relié aux roues motrices d'un véhicule, et un dispositif démultiplicateur de vitesse correspondant chacun à un rapport différent d'engrenage entre l'arbre de sortie et un arbre moteur du véhicule, comprend un module électronique de passage apte à piloter un changement de rapport de la boîte, d'un premier rapport associé au premier embrayage , à un second rapport associé au second embrayage, en pilotant à partir d'un instant initial de début de fermeture du second embrayage, le couple transmissible par chacun des deux embrayages, caractérisé en ce que le profil de variation de couple imposé par le module au second embrayage, présente une dérivée seconde strictement positive sur un intervalle de temps débutant à l'instant initial, la valeur de cette dérivée seconde étant fonction d'un couple de consigne et des valeurs de démultiplication du premier rapport et du second rapport.

Avantageusement, entre l'instant initial de début de fermeture du second embrayage, et un instant final où le couple transmis par le premier embrayage s'annule, la dérivée de la courbe de couple du second embrayage est continue, et la dérivée seconde de la courbe de couple du second embrayage change une seule fois de signe.

Selon un mode de réalisation préféré, entre l'instant initial de début de fermeture du second embrayage, et un instant final où le couple transmis par le premier embrayage s'annule, la courbe de couple imposée par le module de passage au second embrayage, comprend deux portions sous forme de polynômes du second degré, reliées par une portion de courbe affine,

Avantageusement, l'amplitude de la portion affine de la courbe est d'autant plus importante, pour un couple donné du moteur, que la différence de régime est élevée entre le premier rapport en cours de désengagement et le second rapport en cours d'engagement.

Le système de pilotage comprend de préférence un module d'estimation de puissance dissipée, apte à calculer, en fonction d'un couple de consigne ou d'un couple disponible sur l'arbre moteur, et en fonction du régime du moteur et/ou de la vitesse de rotation des roues motrices du véhicule, une valeur de puissance dissipée qui est proportionnelle au couple, et qui est proportionnelle à l'amplitude de la variation de régime de rotation de l'arbre moteur lors du passage du premier rapport au second rapport.

Avantageusement, le module électronique de passage dispose d'une cartographie reliant la puissance dissipée, à la dérivée seconde imposée à la courbe de couple à l'instant initial.

Les valeurs absolues des dérivées secondes cartographiées, sont de préférence croissantes en fonction de la puissance dissipée.

Selon un mode de réalisation préféré, le module de passage est configuré pour imposer, entre l'instant initial de début de fermeture du second embrayage, et un instant final où le couple transmis par le premier embrayage s'annule, une pente maximale à la courbe de couple du second embrayage, qui est aussi la pente de la portion affine de la courbe.

Selon un mode de réalisation préféré qui peut se combiner au précèdent, le module de passage est configuré pour imposer, entre l'instant initial de début de fermeture du second embrayage, et un instant final où le couple transmis par le premier embrayage s'annule, une pente minimale non nulle à la courbe de couple du second embrayage, qui est aussi la pente de la courbe à droite du point initial et à gauche du point final.

Avantageusement, le module de passage est configuré pour imposer des valeurs constantes à la pente minimale et à la pente maximale, indépendamment du couple du moteur et des valeurs de démultiplication des premiers et second rapports.

Selon un mode de réalisation préférentiel, le module de passage est apte à piloter le couple transmissible de chacun des embrayages à partir de l'instant initial de façon à ce que le couple transmis par le premier embrayage s'annule progressivement, pendant que le couple transmis par le second embrayage augmente, et que la somme des couples prélevés sur l'arbre moteur au travers des deux embrayages reste égale à un couple de consigne, le couple de consigné étant défini par une valeur de consigne de couple envoyée au moteur, à laquelle est retranché le couple résistif engendré par l'inertie du moteur quand le régime du moteur varie.

Selon un autre aspect, un procédé de pilotage d'une boîte de vitesses automatique comportant au moins un premier embrayage et un second embrayage permettant de transmettre un couple aux roues d'un véhicule à partir d'un arbre moteur, comprend une étape consistant, à partir d'un instant initial de début de fermeture du second embrayage, le premier embrayage étant partiellement ou totalement fermé, à piloter le glissement des deux embrayages de manière à ce que le couple transmis par le premier embrayage s'annule progressivement, pendant que le couple transmis par le second embrayage augmente, de manière à ce que la somme des couples prélevés sur l'arbre moteur au travers des deux embrayages reste égale à un couple de consigne. Le profil de variation de couple du second embrayage présente une dérivée seconde strictement positive sur un intervalle de temps débutant à l'instant initial, la valeur de cette dérivée seconde étant fonction du couple de consigne et des valeurs de démultiplication du premier rapport et du second rapport.

D'autres buts, avantages et caractéristiques de l'invention apparaîtront à l'examen de la description détaillée de quelques modes de réalisation donnés à titre d'exemples non limitatifs, et illustrés par les dessins annexes, sur lesquels :

- la figure 1 illustre une boîte de vitesses automatique de véhicule munie de coupleurs coniques compacts permettant d'effectuer certains changements de rapport, équipée d'un système de pilotage suivant l'invention ;
- les figures 2a à 2c illustrent des courbes de régime, de couples et de dérivée de couple, caractéristiques d'un changement de rapport montant à faible charge effectué suivant l'invention ;
- les figures 3a à 3c illustrent des courbes de régime, de couple et de dérivée de couple caractéristiques d'un changement de rapport montant en décélération effectué suivant l'invention.

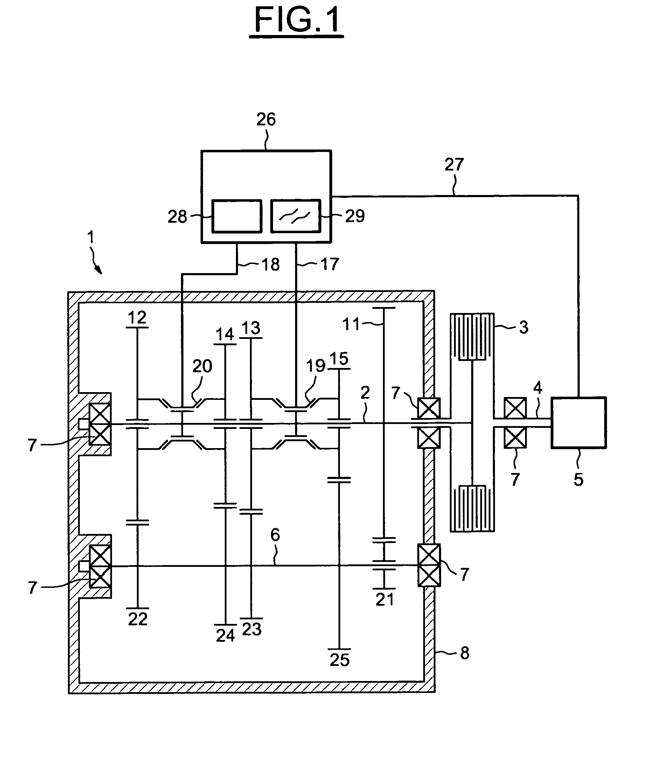

Tel qu'illustré sur la figure 1, une boîte de vitesses 1 comprend un arbre primaire 2 qui peut être couplé en rotation au travers d'un embrayage 3 avec un arbre de sortie 4 d'un moteur à combustion interne 5. La boîte de vitesses 1 comprend également un arbre secondaire 6 relié en rotation à au moins un train de roues (non représenté) d'un véhicule (non représenté). L'arbre primaire 2, l'arbre secondaire 6 et l'arbre moteur 4 sont en appui sur des paliers 7 solidaires d'un carter 8 de la boite de vitesses 1. Sur l'arbre primaire, sont assemblés dans l'ordre quatre pignons fous 15, 13, 14, 12 constituant respectivement des pignons fous de, cinquième, troisième, quatrième et deuxième vitesses. Ces pignons engrènent respectivement avec des pignons fixes 25, 23, 24 et 22 solidaires de l'arbre secondaire 6. Un coupleur conique 19 est interposé ente les pignons 13 et 15, permettant de solidariser l'un ou l'autre pignon de l'arbre primaire 2. Un coupleur conique 20 est interposé entre les pignons 14 et 16, permettant de solidariser l'un ou l'autre pignon de l'arbre primaire 2.

Le coupleur 19, sous l'action d'une fourchette centrale (non représentée) est apte à solidariser soit le pignon 13 soit le pignon 15 en rotation avec l'arbre primaire 2, suivant un principe similaire à celui des synchroniseurs d'une boîte de vitesses manuelle classique, avec cependant la différence suivante : le couple transmissible entre l'arbre primaire 2 et le pignon 13 ou entre l'arbre primaire 2 et le pignon 15 peut être contrôlé de manière proportionnelle, par exemple en faisant varier la pression de la fourchette sur le coupleur, soit en direction du pignon 13, soit en direction du pignon 15 De manière similaire, le coupleur 20 permet de transmettre tout ou partie du couple de l'arbre primaire 2 au travers du pignon 14 ou au travers du pignon 12. Quand un des coupleurs 19 ou 20 est entièrement solidaire de l'un des pignons tous 13 a 16, de manière a ne plus autoriser de glissement de ce pignon par rapport à l'arbre primaire 2, alors le couple de l'arbre primaire 2 est entièrement transmis à l'arbre secondaire 6 avec le rapport de démultiplication correspondant au pignon verrouillé par le coupleur.

Les pressions exercées par les coupleurs 19 et 20 sur les pignons 13, 15, 14 et 12, sont pilotées par une unité de commande électronique 26 au travers de connexions 17 et 18. L'unité de commande électronique 26 pilote également au travers d'une connexion 27 le couple moteur délivré par le moteur 5 sur l'arbre primaire 2. Pour commander ce couple moteur, l'unité de commande électronique 26 envoie une consigne de couple vers un calculateur de contrôle moteur (non représenté) qui détermine les paramètres de fonctionnement du moteur (par exemple la quantité de carburant injectée, le moment de l'injection, la quantité d'air admise dans le moteur, la pression de suralimentation...) permettant d'obtenir le couple moteur désiré. La boîte de vitesses 1 peut également comprendre des pignons de transmission de vitesse NON commandés par des coupleurs coniques compacts, comme par exemple un pignon de première vitesse 11 solidaire en rotation de l'arbre primaire 2 et engrenant avec un pignon fou 21 disposé sur l'arbre secondaire 6, ce pignon fou étant muni d'un système de synchronisation classique (non représenté).

L'unité de commande électronique 26 comprend un module 28 d'estimation de puissance dissipée. La puissance calculée par le module 28 est la puissance de dissipation maximum qui peut être atteinte sur le coupleur engagé ou sur le coupleur à engager au cours de la bascule de couple envisagée. Cette puissance est fonction du régime de rotation du moteur 5 (qui est le même que le régime de rotation de l'arbre moteur 4), de la vitesse de rotation des roues du véhicule, ainsi que des rapports de démultiplication du rapport engagé et du nouveau rapport que l'on s'apprête à engager. Ces données sont transmises au module 28 par un bus central (non représenté) de transmission de données de fonctionnement du véhicule. Quel que soit le type de passage, cette puissance P est égale au couple fourni par le moteur multiplié par la différence entre le régime du rapport initial et le régime du rapport final soit;

$$P = M \times |n\_fin - n\_ini|$$

avec

M une estimation du couple disponible sur l'arbre moteur 4, exprimée en [W]

n_fin : régime du rapport final, exprimé en [rad/s]

n_ini : régime du rapport initial, exprimé en [rad/s]

En pratique, n_ini est le régime (connu) de rotation de l'arbre moteur 4 avant le changement de rapport, et n_fin le régime de l'arbre moteur après le changement de rapport permettant de conserver la même vitesse du véhicule, notamment la même vitesse de rotation des roues du véhicule.

La connaissance des deux rapports de démultiplication, et du régime initial, permet théoriquement de déduire proportionnellement le régime final n_fin après changement de rapport. En pratique, la valeur n_fin est souvent recalculée à partir d'une vitesse effective mesurée des roues du véhicule, ce qui permet de prendre en compte une partie des déperditions d'énergie mécanique.

L'UCE 26 dispose d'une cartographie 29 reliant des valeurs de puissance dissipées (par exemple en watt), dans les plages de valeurs susceptibles d'être délivrées par le module 28, et des valeurs $\alpha$ de dérivées seconde d'un couple par rapport au temps, cette dérivée seconde $\alpha$ ayant la dimension d'une force par une accélération $(Nms^{-2})$ ou d'une force au carré par une masse $(N^2/kg)$.

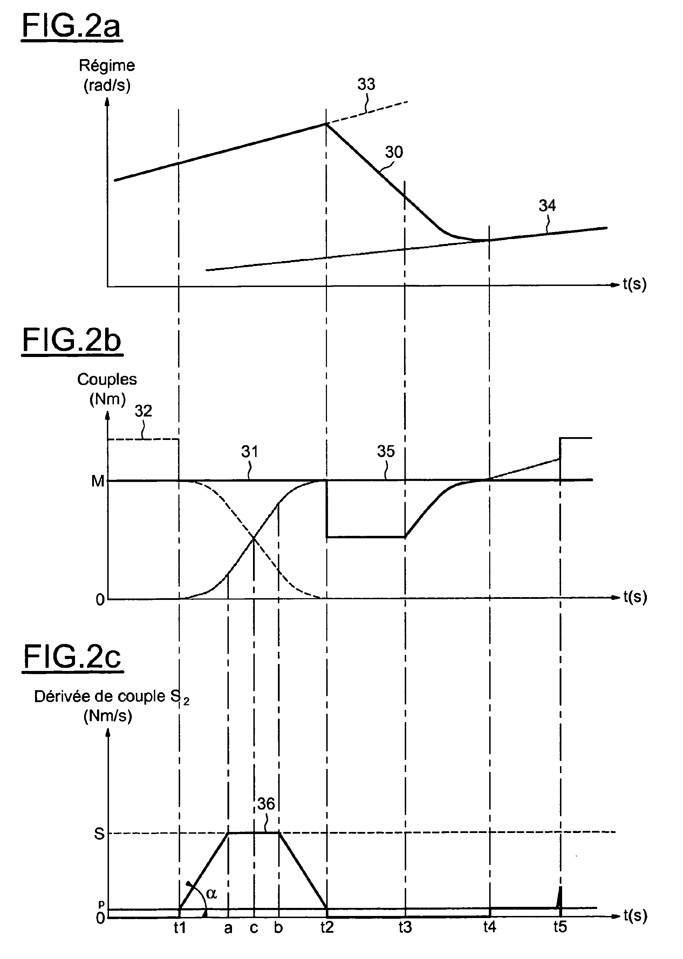

Les figures 2a 2b et 2c de la figure 2 représentent respectivement des courbes caractéristiques de régime, de couples, et des dérivée de couple, lors d'un changement de vitesses montant à faible charge, par exemple lors d'un passage du troisième rapport au quatrième rapport dans la boîte de vitesses 1 de la figure 1. Ces courbes sont toutes tracées par rapport à une même échelle de temps, Pendant tout l'intervalle de temps représenté, embrayage principal 3 est fermé, donc les régimes de rotation de l'arbre moteur 4 et de l'arbre primaire 2 sont identiques.

Sur la figure 2a est représentée une courbe 30 indiquant la vitesse de rotation en radians par seconde de l'arbre primaire 2 en fonction du temps. L'échelle de temps t horizontale comprend notamment un intervalle de temps $t_1$-$t_2$ pendant lequel a lieu une bascule du couple moteur, du pignon 13 de la figure 1, solidarisée a l'arbre primaire 2 par le coupleur 19 vers le pignon 14 qui est alors progressivement solidarisé a l'arbre primaire 2 par le truchement du coupleur 20 Une droite 33 en pointillés indique le régime du moteur 5 adapte a un roulement en troisième vitesse, pour les conditions courantes de charge, de vitesse et d'accélération souhaitées par le conducteur du véhicule. Le régime du moteur 5 correspondant à un roulage en quatrième vitesse, dans les conditions courantes de charge, de vitesse du véhicule, et d'accélération du véhicule, est indique par une droite en pointillés 34 située en dessous de la droite 33. La courbe 30 de régime du moteur suit la droite 33 avant un instant $t_i$ correspondant au début de la bascule de couple du pignon 13 vers le pignon 14 La courbe 30 de régime du moteur suit toujours la droite 33 sur un intervalle de temps $t_1$-$t_2$ correspondant à la phase la bascule de couple du pignon 13 vers le pignon 14. La courbe 30 décroît de manière sensiblement linéaire sur un intervalle de temps $t_2$-$t_4$ postérieur à la bascule de couple, jusqu'à rejoindre la droite 34 La courbe 30 de régime du moteur suit la droite 34 à partir de l'instant $t_4$.

Ce profil de la courbe 30 est obtenu grâce au pilotage en couple du moteur 5 par l'UCE 26, suivant la courbe 31 de la figure 2b Jusqu'à l'instant $t_2$, l'UCE 26 impose une consigne de couple constante au moteur 5, de valeur M. M peut être par exemple une valeur de consigne de couple imposée par le conducteur par l'intermédiaire de l'enfoncement d'une pédale d'accélération.

Une fois que la bascule de couple a été effectuée, l'UCE 26 impose au moteur 5 une consigne de couple de valeur inférieure a M, par exemple une consigne constante, sur un intervalle de temps $t_2$-$t_3$ Cette diminution du couple du moteur 5 a pour conséquence une chute du régime du moteur, si bien que la courbe 30 de la figure 2a s'éloigne de la droite directrice 33 pour se rapprocher de la droite directrice 34. Quand la courbe 30 est suffisamment proche de la droite directrice 34 a un instant $t_3$ l'UCE 26 pilote un retour progressif du couple du moteur 5 vers la valeur M de consigne.

A partir de l'instant $t_4$, l'arbre primaire transmet à nouveau le couple de consigne demande par le conducteur et tourne à un régime correspondant a la droite directrice 34 associée au quatrième rapport de vitesse.

La figure 2b représente, outre le couple 31 de l'arbre moteur 4 qui est aussi le couple de l'arbre primaire 2, les couples maximaux transmissibles au travers des coupleurs 19 et 20. Ces couples maximaux transmissibles sont des fonctions des degrés de fermeture de ces coupleurs. La courbe de couple maximale transmissible par le coupleur 19 est représentée par une courbe 32 et la courbe de couple maximale transmissible par le coupleur 20 est représentée par une courbe 35 Le couple transmissible par un coupleur peut par exemple être égal à une pression d'un actionneur sur ce coupleur. Le couple transmis par un coupleur est égal au couple transmissible par ce coupleur quand le coupleur est dans une configuration de patinage.

La bascule de couple mentionnée précédemment a lieu sur l'intervalle de temps $t_1$-$t_2$ Un peu avant l'instant $t_1$, le couple 32 transmissible par le coupleur 19 est supérieur au couple moteur M de consigné, afin que le coupleur 19 soit en mesure de transmettre tout le couple moteur disponible. Quelques instants avant le moment $t_1$, le coupleur 19 est desserré de manière à amener la valeur de couple transmissible par ce coupleur à une valeur sensiblement égale à celle du couple moteur. De cette façon, le coupleur se trouve en limite de glissement. Une diminution subséquente de la pression appliquée au coupleur 19 se traduit alors par une diminution immédiate du couple effectivement transmis par le pignon 13.

En parallèle, juste avant l'instant $t_1$, la pression du coupleur 20 jusqu'ici totalement ouvert, est augmentée jusqu'à atteindre la limite de glissement entre le coupleur 20 et le pignon 14. De cette façon une augmentation subséquente de pression dans le coupleur 20 pourra induire une augmentation immédiate du couple effectivement transmis au travers du coupleur 20 par le pignon 14.

Grâce aux consignes envoyées par l'UCE 26 aux coupleurs 19 et 20, sur l'intervalle de temps $t_1$-$t_2$, la courbe 32 de couple du coupleur 19 décroît progressivement jusqu'à une valeur de couple nul, tandis que la courbe 35 traduisant le couple transmissible par le coupleur 20, augmente progressivement jusqu'à atteindre la valeur de consigne M de couple du moteur 5. L'UCE 26 pilote les variations de couple transmissibles par les deux coupleurs de manière à ce que la somme des deux couples transmissibles reste en permanence égale au couple de consigne M Le couple consigne M étant ici constant entre les instants $t_1$ et $t_2$ les courbes 32 et 35 sont donc symétriques l'une de l'autre sur cet intervalle de temps $t_1$-$t_2$.

A partir de l'instant $t_4$, une fois que l'arbre moteur 4 a atteint le régime adapté au 4ème rapport de vitesses, l'UCE 26 termine de fermer le coupleur 20, c'est-à-dire qu'elle impose une augmentation progressive de la pression du coupleur sur le pignon 14, jusqu'à atteindre en un instant $t_5$, une valeur maximale de fermeture pour le couple transmissible par le pignon 14. La valeur maximale de fermeture est supérieure au couple de l'arbre moteur. A partir de l'instant $t_5$, le couple maximal transmissible du coupleur 20 est maintenu à sa valeur maximale de fermeture jusqu'au prochain changement de rapport

La courbe 36 de la figure 2c illustre la dérivée, c'est-à-dire les variations de pente, de la courbe 35 de la figure 2b. La courbe 35 traduit les variations de couple transmissible par le coupleur 20 associé au pignon 14 en cours d'engagement. A partir de l'instant $t_1$ correspondant au début de la phase de bascule, l'unité de commande électronique 26 impose au couple 35 de la figure 2b une pente minimale supérieure ou égale à une valeur strictement positive p. Cette valeur minimale p est par exemple choisie de manière à ce que la discontinuité, en $t_1$, de variation de la valeur de couple de la courbe 35, soit du même ordre que les discontinuités perçues du fait des imprécisions de suivi de consigne. Dans certaines variantes de réalisation, la valeur de la pente p peut être nulle, mais le temps nécessaire pour effectuer le changement de rapport est alors légèrement plus important. La pente de la courbe 35 est ensuite augmentée de manière linéaire par rapport au temps jusqu'à ce qu'elle atteigne à un instant « a » une valeur maximale S, qui est légèrement inférieure à la dynamique maximum permise par l'actionneur faisant varier le couple transmissible par le coupleur 20. La valeur de cette pente S maximale doit également être inférieure à la dynamique maximum de l'actionneur faisant varier la pression du coupleur 19, puisque entre les instants $t_1$ et $t_2$ les courbes 32 et 35 sont symétriques l'une de l'autre, de somme constante M. A partir de l'instant « a », la courbe 35 garde ensuite une pente constante S jusqu'à un instant « c », où le couple M de l'arbre primaire est réparti à parts égales entre les coupleurs 19 et 20 L'instant « c », correspond au point de croisement des courbes 32 et 35. Chacun des coupleurs 19 et 20 transmet alors par l'intermédiaire du pignon 13 ou 14, une valeur de couple égale à la moitié du couple M transmis par l'arbre primaire 2

A partir de l'instant c correspondant au point de croisement des deux courbes 32 et 35, l'unité de commande électronique 26 pilote les couples transmissibles par les coupleurs 19 et 20 de manière à ce que, sur un intervalle de temps $t_1$-$t_2$ double de l'intervalle de temps $t_1$-c, les courbes 32 et 35 soient toutes deux symétriques par rapport à leur point de croisement. La pente 36 de la courbe 35 reste donc constante sur un intervalle de temps c-b de même longueur que l'intervalle de temps a-c, puis diminue de manière linéaire jusqu'à atteindre en $t_2$, la valeur de pente minimale p A l'instant t2, le couple 35 transmissible par le coupleur 20 atteint la valeur M de consigne de couple du moteur 5, et est maintenu par l'UCE 26 à cette valeur constante jusqu'à l'instant $t_4$, où le régime 30 de l'arbre moteur a été adapté au nouveau rapport engagé

Ensuite, sur un intervalle de temps $t_4$-$t_5$, l'UCE 26 pilote une remontée du couple transmissible par le coupleur 20, par exemple suivant une pente égale à la pente minimale p Une fois que le couple transmissible est plus élevé que le couple de consigne, l'UCE 26 peut imposer, à un instant $t_5$, une fin de fermeture presque instantanée du coupleur, qui ramène la valeur de couple transmissible à la valeur maximale de couple transmissible par le coupleur 20.

S et p sont des constantes enregistrées dans des mémoires spécifiques (non représentée) de l'UCE 26 Les valeurs p et S peuvent être des valeurs calibrables, ajustables en fonction du niveau de continuité du couple total exige par le conducteur lors des bascules de couple.

En pratique, l'unité de commande électronique 26 calcule a chaque instant la pente $S_2$ de la courbe 35, puis calcule la valeur de couple 35 a imposer par intégration à partir de la fonction $S_2$ ainsi calculée. A partir de l'instant $t_1$ où le couple transmissible 35 commence à croître à partir de zéro, la valeur de la pente $S_2$ est une fonction affine de la forme $p+\alpha t$, bornée supérieurement par la valeur S Autrement dit, la valeur de la pente $S_2$ peut s'écrire sous la forme

$$S_2 = \min(p + \alpha t, S) \qquad\qquad (\text{Equation 1})$$

où

p est la valeur minimale de pente de la courbe 35 exprimée en Newton mètres par seconde,

S est la pente maximale en valeur absolue de la courbe 35 exprimée en Newton mètres par seconde, c'est-à-dire que la valeur absolue de la pente de la courbe 35 ne pourra pas dépasser S,

t est le temps exprimé en secondes,

$\alpha$ est la vitesse de variation de la pente de la courbe 35, exprimée en Newton mètres par seconde au carré, $\alpha$ est une valeur lue dans la cartographie 29 de la figure 1, par l'UCE 26, à partir de la valeur de puissance calculée par le module d'estimation de puissance 28.

Une fois que, à l'instant t=a, la pente $S_2$ de la courbe 35 atteint la valeur S, cette pente de la courbe 35 est maintenue à cette valeur constante S jusqu'à arriver à l'instant t=b, symétrique, de l'instant t=a par rapport à l'instant de croisement c des courbes 32 et 35. La pente $S_2$ de la courbe 35 décroît alors suivant une pente $-\alpha$ jusqu'à redescendre à la valeur de pente minimale p à un instant $t_2$, suivant l'équation :

$$S_2 = \max(S - \alpha t, p) \qquad \text{(Equation 2)}$$

En fonction de la valeur $\alpha$, la valeur de pente maximale S peut être atteinte, ou ne pas être atteinte, au moment où les deux courbes se croisent, c'est-à-dire à l'instant où le couple transmis par chacun des coupleurs est égal à la moitié de la valeur M du couple transmis par l'arbre primaire 2 Si la valeur S est atteinte, la portion de courbe 35 correspondant à l'étape de bascule entre les instants $t_1$ et $t_2$ se compose donc d'une première portion de courbe sous forme d'un polynôme du second degré, d'une portion de courbe affine présentant une pente S, et d'une seconde portion sous forme de polynôme du second degré symétrique de la première.

Dans le cas où la valeur de pente maximale S n'est pas atteinte, la portion de courbe 35 entre les instants $t_1$ et $t_2$ se compose de deux portions symétriques sous forme de polynômes du second degré, sa portion sous forme affine étant réduite à un point

La portion de courbe 36 comprise entre les instants $t_4$ et $t_5$ traduit la fermeture progressive du coupleur 20, dont le couple transmissible est augmenté de sa valeur en fin de bascule jusqu'à une valeur maximale correspondant au verrouillage du coupleur.

Si la valeur de variation de pente $\alpha$ est élevée, la portion de courbe 35 correspondant à la phase de bascule sera constituée essentiellement d'une portion affine de pente S. L'intervalle de temps $t_1$-$t_2$ nécessaire pour effectuer la bascule sera moins important que pour les valeurs de a plus faibles, et la transition entre la pente minimale p et la pente maximale S sera effectuée sur un intervalle de temps $t_1$-a faible.

En revanche, si la valeur de variation de pente $\alpha$ est réduite, la transition de pente entre les valeurs t et S s'effectuera sur des intervalles de temps $t_1$-a et b-$t_2$ plus importantes. Le temps total $t_1$-$t_2$ nécessaire à la bascule sera alors plus élevé.

Il est donc intéressant d'avoir une valeur $\alpha$ élevée lorsqu'on souhaite effectuer la bascule de couple rapidement, par exemple dans le cas oú les énergies de frottement dissipées dans les coupleurs 19 et 20 risqueraient de détériorer les coupleurs. Il est au contraire intéressant d'utiliser une valeur $\alpha$ faible lorsque l'on souhaite que les variations de pente de la phase de bascule de couple soient progressives. La cartographie 29 de la figure 1 est définie en fonction de ces préférences, c'est-à-dire que les valeurs de dérivée seconde cartographiées, sont croissantes en fonction de la puissance dissipée.

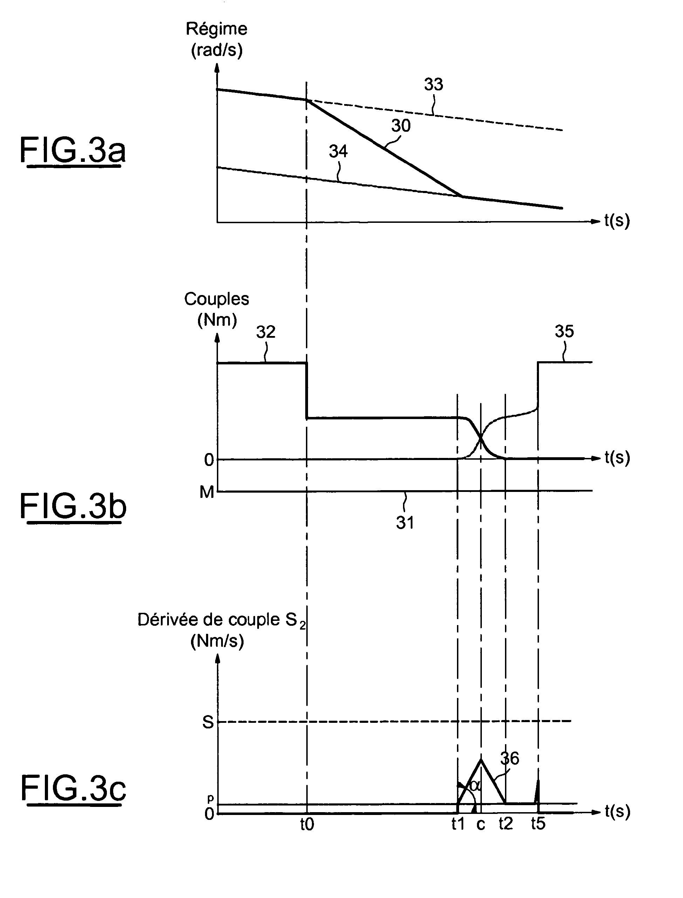

Les figures 3a à 3c illustrent, dans le cas d'une passage de vitesse montant "sur erre" (le véhicule étant en décélération) des courbes équivalentes au courbes des figures 2a à 2c. Les courbes de même nature sont illustrées par les mêmes références. Dans cette configuration, le régime 30 du moteur 5 est d'abord amené de la droite directrice 33 correspondant au régime du rapport initial, vers la droite directrice 34 correspondant au régime adapté au rapport final. Cette adaptation du régime, visible sur la figure 3a, a lieu sur un intervalle de temps $t_0$.$t_1$, précèdent la phase de bascule de couple visible sur la figure 3b, qui est effectuée sur un intervalle de temps $t_1$ - $t_2$ L'adaptation du régime du moteur est obtenu en ouvrant à l'instant $t_0$ le coupleur initial 19, de manière a ce qu'il transmette une valeur de couple très légèrement inférieure, en valeur absolue, au couple M de l'arbre moteur. Les courbes 32 et 35 correspondant aux couples transmissibles par les coupleurs 19 et 20 sont ici représentées en positives, alors que le couple M moteur 5 est représente en valeur négative, puisque le véhicule est en décélération (frein moteur) Le coupleur 19 est maintenu a une consigne de couple constante jusqu'à la fin de l'adaptation du régime moteur, puis l'UCE 26 déclenche entre les instants $t_1$ et $t_2$ la phase de bascule de couple Après la fin de la bascule de couple, le couple transmissible 35 du coupleur 20 est amené à une valeur legèrement supérieure en valeur absolue, a la valeur du couple moteur M Puis le coupleur 20 est ferme à l'instant $t_5$, amenant sa valeur de couple transmissible à sa valeur maximale de verrouillage. Le couple total à transmettre est ici plus faible que dans la configuration des figures 2a à 2c, si bien que la courbe 36 de dérivée de couple du coupleur 20 n'a pas le temps d'atteindre la valeur maximale S, et les portions de courbes 32 et 35 sont uniquement constituées de portions de polynômes du second degré pendant la phase de bascule $t_1$-$t_2$ La pente $\alpha$ de la courbe 36 est sur la figure 3c représentée équivalente à celle de la courbe 36 de la figure 2c, Cependant, cette pente pourrait être plus importante ou moins importante en fonction des énergies mises en jeu dans les deux cas.

L'objet de l'invention ne se limite pas aux exemples de réalisation décrits et peut faire l'objet de nombreuses variantes. Le système de pilotage décrit peut s'appliquer a une boîte de vitesse à coupleurs multiples, comme décrit, ou à une boite de vitesse à deux embrayages. Dans ce cas le raisonnement développé pour le pilotage des couples transmissibles par deux coupleurs associés chacun à deux pignons de vitesse s'applique au pilotage des couples transmissibles par les deux embrayages de la boîte, associés chacun à un arbre secondaire portant deux pignons de vitesses ou davantage.

Le couple de consigne M peut être un couple de consigne constant imposé par l'UCE 26 pendant le changement de rapport, en fonction de la dernière consigne de couple demandé par le conducteur avant l'initiation du basculement. Le couple de consigne M peut par aussi être un couple variable reflétant la consigne de couple demandée par le conducteur, au moyen de l'enfoncement d'une pédale d'accélération.

Dans les deux cas, on aura avantage à choisir un couple de consigne anticipant les variations probables du couple réel de l'arbre moteur 4, par exemple :

$$M = C_{pédale} - J\frac{dN}{dt}, \qquad \text{(Équation 3)}$$

avec :

$C_{pédale}$ une consigne de couple émanent du conducteur, par exemple par un appui sur une pédale d'accélération,

J l'inertie du moteur $(kg,m^2)$ $\frac{dN}{dt}$ la dérivée par rapport au temps du régime de rotation de l'arbre moteur,

M (en Nm) le couple de consigne qui est la valeur transmise que doit respecter La somme des couples transmis par le premier coupleur et par le second coupleur, et qui est aussi la valeur servant, juste avant l'étape de bascule, à calculer la puissance dissipée maximale pour décider de la valeur du paramètre $\alpha$. Dans les exemples illustrés aux figures 2 et 3, on ne prend pas en compte les variations de M pendant la phase de bascule, et on utilise uniquement la valeur M en début de bascule,

L'équation 3 tient compte du fait que la pression dans les cylindres du moteur, sous l'effet de la commande de l'UCE 26, fournit un travail correspondant au couple $C_{pédale}$, qui se répercute au niveau de l'arbre moteur 4 avec un retard correspondant à l'inertie du moteur 5.

Dans les variantes de réalisations où l'UCE 26 impose une valeur variable à la somme des couples transmis par les deux coupleurs, en prenant en compte les variations du couple de consigne :

$$M = C_{pédale} - J\frac{dN}{dt}$$

pendant le changement de rapport on pourra conserver le principe du calcul d'une pente moyenne $S_2$ de variation de couple suivant les équations 1 et 2 mentionnées plus haut, et calculer par exemple les couples transmissibles à imposer aux deux coupleurs par intégration à partir de $S_2$ suivant les formules suivantes :

$$C_{32}(t+\delta t) = C_{32}(t) - S_2 \delta t$$

$$C_{35}(t+\delta t) = M - M_0 + C_{35}(t) + S_2 \delta t$$

où $C_{32}$ est le couple transmissible du coupleur initialement engagé, $C_{35}$ est le couple transmissible du coupleur en cours d'engagement M est le couple de consigne courant, et $M_0$ le couple de consigne au début du changement de rapport, t l'instant précèdent de calcul, et $t+\delta t$ l'instant actuel de calcul. La pente maximale S devra être prévue suffisamment en deçà de la dynamique maximale de l'actionneur du coupleur eu cours d'engagement, pour permettre le supplément de dynamique exigé par les variations de $M-M_0$.

Dans les cas où la consigne de couple émanent du conducteur ne varie pas, ou peu, les deux modes de réalisation (somme des couples variable, ou somme des couples fixe) se confondent.

Le système de pilotage suivant l'invention permet d'adapter la progressivité de la bascule de couple à l'énergie mise en oeuvre dans la propulsion du véhicule, ce qui augmente la durée de vie du système de transmission tout en autorisant des changements de vitesse sans à coups dans les configurations de roulage à faible énergie.

**EP 2 400 188 B1**

**Revendications**

1. Système de pilotage d'une boîte de vitesses (1) automatique comprenant un premier embrayage (19) et un second embrayage (20) permettant chacun de coupler ou de découpler progressivement en rotation un arbre de sortie (6) relié aux roues motrices d'un véhicule, et un dispositif démultiplicateur de vitesse correspondant chacun à un rapport différent (13, 14) d'engrenage entre l'arbre de sortie (6) et un arbre moteur (2) du véhicule, le système comprenant un module électronique de passage (26) apte à piloter un changement de rapport de la boîte (1), d'un premier rapport associé au premier embrayage (19), à un second rapport associé au second embrayage (20), en pilotant à partir d'un instant initial ($t_1$) de début de fermeture du second embrayage (20), le couple transmissible (32, 35) par chacun des deux embrayages, le profil de variation de couple imposé par le module au second embrayage (35), présente une dérivée seconde (36) strictement positive sur un intervalle de temps ($t_1$-a) débutant à l'instant initial ($t_1$), **caractérisé en ce que** la valeur de cette dérivée seconde est fonction d'un couple de consigne (M) et des valeurs de démultiplication du premier rapport et du second rapport.

2. Système de pilotage suivant la revendication 1, dans lequel, entre l'instant initial ($t_1$) de début de fermeture du second embrayage (20), et un instant final ($t_2$) où le couple transmis par le premier embrayage (19) s'annule, la dérivée (36) de la courbe de couple du second embrayage (20) est continue, et la dérivée seconde de la courbe de couple du second embrayage (20), change une seule fois de signe.

3. Système de pilotage suivant l'une des revendications précédentes, dans lequel dans lequel, entre l'instant initial ($t_1$) de début de fermeture du second embrayage (20), et un instant final ($t_2$) où le couple transmis par le premier embrayage (19) s'annule, la courbe de couple (35) imposée par le module de passage (26) au second embrayage (20), comprend deux portions sous forme de polynômes du second degré, reliées par une portion de courbe affine.

4. Système de pilotage suivant l'une des revendications précédentes, comprenant en outre un module d'estimation (28) de puissance dissipée, apte à calculer, en fonction d'un couple de consigne (M) ou d'un couple disponible sur l'arbre moteur (2), et en fonction du régime du moteur (5) et/ou de la vitesse de rotation des roues motrices du véhicule, une valeur de puissance dissipée qui est proportionnelle au couple, et qui est proportionnelle à l'amplitude de la variation de régime de rotation de l'arbre moteur (2) lors du passage du premier rapport au second rapport.

5. Système de pilotage suivant la revendication 4, dans lequel le module électronique de passage (26) dispose d'une cartographie (29) reliant la puissance dissipée, à la dérivée seconde imposée à l'instant initial à l'une des courbes de couple (35) des deux embrayages.

6. Système de pilotage suivant la revendication 5, dans lequel les valeurs absolues des dérivée seconde cartographiées, sont croissantes en fonction de la puissance dissipée.

7. Système de pilotage suivant l'une des revendications 3 à 6, dans lequel le module de passage (26) est configuré pour imposer, entre l'instant initial ($t_1$) de début de fermeture du second embrayage (20), et un instant final ($t_2$) où le couple transmis par le premier embrayage (19) s'annule, une pente maximale (S) à la courbe de couple (35) du second embrayage (20), qui est aussi la pente de la portion affine de la courbe (35).

8. Système de pilotage suivant l'une des revendications précédentes, dans lequel le module de passage (26) est configuré pour imposer, entre l'instant initial ($t_1$) de début de fermeture du second embrayage (20), et un instant final ($t_2$) où le couple transmis par le premier embrayage (19) s'annule, une pente minimale (p) non nulle à la courbe de couple (35) du second embrayage (20), qui est aussi la pente de la courbe à droite du point initial et à gauche du point final.

9. Système de pilotage suivant les revendications 7 et 8, dans lequel le module de passage (26) est configuré pour imposer des valeurs constantes à la pente minimale (p) et à la pente maximale (S), indépendamment du couple du moteur (M) et des valeurs de démultiplication des premiers et second rapports.

10. Système de pilotage suivant l'une des revendications précédentes, dans lequel le module de passage (26) est apte à piloter le couple transmissible (32 35) de chacun des embrayages à partir de l'instant initial ($t_1$) de façon à ce que le couple (32) transmis par le premier embrayage (19) s'annule progressivement, pendant que le couple (35) transmis par le second embrayage (20) augmente, et que la somme des couples prélevés sur l'arbre moteur (2) au travers des deux embrayages (19, 20) reste égale à un couple de consigne (M), le couple de consigné étant défini par une valeur de consigne de couple envoyée au moteur, à laquelle est retranché le couple résistif engendré par l'inertie du moteur (5) quand le régime du moteur varie.

11. Procédé de pilotage d'une boîte de vitesses automatique comportant au moins un premier embrayage (19) et un second embrayage (20) permettant de transmettre un couple aux roues d'un véhicule à partir d'un arbre moteur (2), le procédé comprenant une étape consistant, à partir d'un instant initial ($t_1$) de début de fermeture du second embrayage (20), le premier embrayage (19) étant partiellement ou totalement fermé, à piloter le glissement des deux embrayages (19,20) de manière à ce que le couple (32) transmis par le premier embrayage (19) s'annule progressivement, pendant que le couple (35) transmis par le second embrayage (20) augmente, de manière à ce que la somme des couples prélevés sur l'arbre moteur au travers des deux embrayages (19,20) reste égale à un couple de consigne (M), le profil (35) de variation de couple du second embrayage (20) présente une dérivée seconde strictement positive sur un intervalle de temps débutant à l'instant initial ($t_1$), **caractérisé en ce que** la valeur de cette dérivée seconde est fonction du couple de consigne (M) et des valeurs de démultiplication du premier rapport et du second rapport.

## Claims

1. System for controlling an automatic transmission (1) comprising a first clutch (19) and a second clutch (20) each making it possible to progressively couple or uncouple in rotation an output shaft (6) linked to the drive wheels of a vehicle, and a speed gear reduction device each corresponding to a different gear ratio (13, 14) between the output shaft (6) and a drive shaft (2) of the vehicle, the system comprising an electronic shift module (26) capable of controlling a change of ratio of the transmission (1), from a first ratio associated with the first clutch (19), to a second ratio associated with the second clutch (20), by controlling, from an initial instant ($t_1$) of the start of closure of the second clutch (20), the torque (32, 35) that can be transmitted by each of the two clutches, the torque variation profile imposed by the module on the second clutch (35) exhibiting a second drift (36) that is strictly positive over a time interval ($t_{1-a}$) starting at the initial instant ($t_1$), **characterized in that** the value of this second drift is a function of a set point torque (M) and of the gear reduction values of the first ratio and of the second ratio.

2. Control system according to Claim 1, in which, between the initial instant ($t_1$) of the start of closure of the second clutch (20), and a final instant ($t_2$) when the torque transmitted by the first clutch (19) is cancelled, the drift (36) of the torque curve of the second clutch (20) is continuous, and the second drift of the torque curve of the second clutch (20) changes sign only once.

3. Control system according one of the preceding claims, in which, between the initial instant ($t_1$) of the start of closure of the second clutch (20), and a final instant ($t_2$) when the torque transmitted by the first clutch (19) is cancelled, the torque curve (35) imposed by the shift module (26) on the second clutch (20), comprises two portions in the form of second degree polynomials, linked by an affine curve portion.

4. Control system according to one of the preceding claims, also comprising a dissipated power estimation module (28), capable of calculating, as a function of a set point torque (M) or of a torque available on the drive shaft (2), and as a function of the speed of the engine (5) and/or of the speed of rotation of the drive wheels of the vehicle, a dissipated power value which is proportional to the torque, and which is proportional to the amplitude of the rotation speed variation of the drive shaft (2) during the shift from the first ratio to the second ratio.

5. Control system according to Claim 4, in which the electronic shift module (26) has access to a mapping (29) linking the dissipated power to the second drift imposed at the initial instant on one of the torque curves (35) of the two clutches.

6. Control system according to Claim 5, in which the absolute values of the mapped second drifts are increasing as a function of the dissipated power.

7. Control system according to one of Claims 3 to 6, in which the shift module (26) is configured to impose, between the initial instant ($t_1$) of the start of closure of the second clutch (20), and a final instant ($t_2$) when the torque transmitted by the first clutch (19) is cancelled, a maximum slope (S) on the torque curve (35) of the second clutch (20), which is also the slope of the affine portion of the curve (35).

8. Control system according to one of the preceding claims, in which the shift module (26) is configured to impose, between the initial instant ($t_1$) of the start of closure of the second clutch (20), and a final instant ($t_2$) when the torque

transmitted by the first clutch (19) is cancelled, a non-zero minimum slope (p) on the torque curve (35) of the second clutch (20), which is also the slope of the curve to the right of the initial point and to the left of the final point.

9. Control system according to Claims 7 and 8, in which the shift module (26) is configured to impose constant values on the minimum slope (p) and on the maximum slope (S), independently of the torque of the engine (M) and of the gear reduction values of the first and second ratios.

10. Control system according to one of the preceding claims, in which the shift module (26) is capable of controlling the transmissible torque (32, 35) of each of the clutches from the initial instant ($t_1$) in such a way that the torque (32) transmitted by the first clutch (19) is progressively cancelled, while the torque (35) transmitted by the second clutch (20) increases, and that the sum of the torques taken from the drive shaft (2) through the two clutches (19, 20) remains equal to a set point torque (M), the set point torque being defined by a torque set point value sent to the engine, from which is subtracted the resistive torque generated by the inertia of the engine (5) when the speed of the engine varies.

11. Method for controlling an automatic transmission comprising at least one first clutch (19) and one second clutch (20) that makes it possible to transmit a torque to the wheels of a vehicle from a drive shaft (2), the method comprising a step consisting, from an initial instant ($t_1$) of the start of closure of the second clutch (20), the first clutch (19) being partially or totally closed, in controlling the slip of the two clutches (19, 20) so that the torque (32) transmitted by the first clutch (19) is progressively cancelled, while the torque (35) transmitted by the second clutch (20) increases, so that the sum of the torques taken from the drive shaft through the two clutches (19, 20) remains equal to a set point torque (M), the torque variation profile (35) of the second clutch (20) exhibiting a second drift that is strictly positive over a time interval beginning at the initial instant ($t_1$), **characterized in that** the value of this second drift is a function of the set point torque (M) and of the gear reduction values of the first ratio and of the second ratio.

**Patentansprüche**

1. Steuersystem eines Automatikgetriebes (1), das eine erste Kupplung (19) und eine zweite Kupplung (20) enthält, die es je ermöglichen, eine mit den Antriebsrädern eines Fahrzeugs verbundene Abtriebswelle (6) und eine Untersetzungsgetriebevorrichtung progressiv in Drehung zu koppeln oder zu entkoppeln, die je einer anderen Getriebeschaltstufe (13, 14) zwischen der Abtriebswelle (6) und einer Antriebswelle (2) des Fahrzeugs entsprechen, wobei das System ein elektrisches Umschaltmodul (26) enthält, das einen Schaltvorgang des Getriebes (1) von einer mit der ersten Kupplung (19) verbundenen Schaltstufe in eine mit der zweiten Kupplung (20) verbundene Schaltstufe steuern kann, indem ausgehend von einem Anfangszeitpunkt ($t_1$) des Schließbeginns der zweiten Kupplung (20) das von jeder der zwei Kupplungen übertragbare Drehmoment (32, 35) gesteuert wird, wobei das vom Modul der zweiten Kupplung (35) vorgegebene Drehmomentänderungsprofil eine strikt positive zweite Ableitung (36) über einen Zeitraum ($t_1$-a) aufweist, der im Anfangszeitpunkt ($t_1$) beginnt, **dadurch gekennzeichnet, dass** der Wert dieser zweiten Ableitung von einem Solldrehmoment (M) und von den Untersetzungswerten der ersten und der zweiten Schaltstufe abhängt.

2. Steuersystem nach Anspruch 1, bei dem zwischen dem Anfangszeitpunkt ($t_1$) des Schließbeginns der zweiten Kupplung (20) und einem Endzeitpunkt ($t_2$), an dem das von der ersten Kupplung (19) übertragene Drehmoment sich aufhebt, die Ableitung (36) der Drehmomentkurve der zweiten Kupplung (20) durchgehend ist, und die zweite Ableitung der Drehmomentkurve der zweiten Kupplung (20) nur einmal ihr Vorzeichen ändert.

3. Steuersystem nach einem der vorhergehenden Ansprüche, bei dem zwischen dem Anfangszeitpunkt ($t_1$) des Schließbeginns der zweiten Kupplung (20) und einem Endzeitpunkt ($t_2$), an dem das von der ersten Kupplung (19) übertragene Drehmoment sich aufhebt, die vom Schaltmodul (26) der zweiten Kupplung (20) vorgegebene Drehmomentkurve (35) zwei Teile in Form von Polynomen zweiten Grades enthält, die durch einen affinen Kurventeil verbunden sind.

4. Steuersystem nach einem der vorhergehenden Ansprüche, das außerdem ein Schätzmodul (28) der Verlustleistung enthält, das abhängig von einem Solldrehmoment (M) oder von einem an der Antriebswelle (2) verfügbaren Drehmoment und abhängig von der Motordrehzahl (5) und/oder der Drehgeschwindigkeit der Antriebsräder des Fahrzeugs einen Wert der Verlustleistung berechnen kann, der proportional zum Drehmoment ist, und der proportional zur Amplitude der Änderung der Drehzahl der Antriebswelle (2) beim Übergang von der ersten Schaltstufe zur zweiten Schaltstufe ist.

5. Steuersystem nach Anspruch 4, bei dem das elektronische Umschaltmodul (26) über ein Kennfeld (29) verfügt, das die Verlustleistung mit der zweiten Ableitung verbindet, die am Anfangszeitpunkt einer der zwei Drehmomentkurven (35) der zwei Kupplungen vorgegeben wird.

6. Steuersystem nach Anspruch 5, bei dem die im Kennfeld erfassten Absolutwerte der zweiten Ableitung abhängig von der Verlustleistung zunehmend sind.

7. Steuersystem nach einem der Ansprüche 3 bis 6, bei dem das Umschaltmodul (26) konfiguriert ist, um zwischen dem Anfangszeitpunkt ($t_1$) des Schließbeginns der zweiten Kupplung (20) und einem Endzeitpunkt ($t_2$), an dem das von der ersten Kupplung (19) übertragene Drehmoment sich aufhebt, der Drehmomentkurve (35) der zweiten Kupplung (20) eine maximale Steigung (S) vorzugeben, die auch die Steigung des affinen Teils der Kurve (35) ist.

8. Steuersystem nach einem der vorhergehenden Ansprüche, bei dem das Umschaltmodul (26) konfiguriert ist, um zwischen dem Anfangszeitpunkt ($t_1$) des Schließbeginns der zweiten Kupplung (20) und einem Endzeitpunkt ($t_2$), an dem das von der ersten Kupplung (19) übertragene Drehmoment sich aufhebt, der Drehmomentkurve (35) der zweiten Kupplung (20) eine minimale Steigung (p) ungleich Null vorzugeben, die auch die Steigung der Kurve rechts vom Anfangspunkt und links vom Endpunkt ist.

9. Steuersystem nach den Ansprüchen 7 und 8, bei dem das Umschaltmodul (26) konfiguriert ist, um der minimalen Steigung (p) und der maximalen Steigung (S) unabhängig vom Drehmoment des Motors (M) und den Untersetzungswerten der ersten und zweiten Schaltstufen konstante Werte vorzugeben.

10. Steuersystem nach einem der vorhergehenden Ansprüche, bei dem das Umschaltmodul (26) das übertragbare Drehmoment (32, 35) jeder der Kupplungen ausgehend von dem Anfangszeitpunkt ($t_1$) so steuern kann, dass das von der ersten Kupplung (19) übertragene Drehmoment (32) sich progressiv aufhebt, während das von der zweiten Kupplung (20) übertragene Drehmoment (35) zunimmt, und dass die Summe der an der Antriebswelle (2) über die zwei Kupplungen (19, 20) abgenommenen Drehmomente gleich einem Solldrehmoment (M) bleibt, wobei das Solldrehmoment von einem an den Motor geschickten Drehmomentsollwert definiert wird, von dem das Widerstandsdrehmoment abgezogen wird, das von der Trägheit des Motors (5) erzeugt wird, wenn die Drehzahl des Motors variiert.

11. Verfahren zum Steuern eines Automatikgetriebes, das mindestens eine erste Kupplung (19) und eine zweite Kupplung (20) aufweist, die es ermöglichen, ausgehend von einer Antriebswelle (2) ein Drehmoment an die Räder eines Fahrzeugs zu übertragen, wobei das Verfahren einen Schritt enthält, der ausgehend von einem Anfangszeitpunkt ($t_1$) des Schließbeginns der zweiten Kupplung (20), während die erste Kupplung (19) teilweise oder ganz geschlossen ist, darin besteht, das Gleiten der zwei Kupplungen (19, 20) derart zu steuern, dass das von der ersten Kupplung (19) übertragene Drehmoment (32) sich progressiv aufhebt, während das von der zweiten Kupplung (20) übertragene Drehmoment (35) zunimmt, damit die Summe der an der Antriebswelle über die zwei Kupplungen (19, 20) entnommenen Drehmomente gleich einem Solldrehmoment (M) bleibt, wobei das Profil (35) der Drehmomentänderung der zweiten Kupplung (20) eine strikt positive zweite Ableitung über einen Zeitraum aufweist, der am Anfangszeitpunkt ($t_1$) beginnt, **dadurch gekennzeichnet, dass** der Wert dieser zweiten Ableitung vom Solldrehmoment (M) und von den Untersetzungswerten der ersten und der zweiten Schaltstufe abhängt.

# FIG.1

## FIG.2a

Régime
(rad/s)

33

30

34

t(s)

## FIG.2b

Couples
(Nm)  32

M   31   35

0

t(s)

## FIG.2c

Dérivée de couple S₂
(Nm/s)

36

S

α

P
0
t1  a c b  t2  t3  t4  t5   t(s)

FIG.3a

FIG.3b

FIG.3c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1132659 A
- US 2005037893 A